# EUROPEAN PATENT APPLICATION

(11) **EP 0 617 534 A1**
(43) Date of publication of application: **28.09.1994**
(21) Application number: 94104161.8
(22) Date of filing: 17.03.1994
(51) Int. Cl.: H04M 1/30

(54) **DTMF or decadic signalling mode for a telephone set**

(30) Priority: 25.03.1993 AT 7966/93
(71) Applicant: ALCATEL AUSTRALIA LIMITED, Alexandria, Sydney 2015 (AU)
(72) Inventor: Crowe, Kevin Anthony, Bangor, 2234, N.S.W. (AU)
(74) Representative: Pohl, Herbert, Dipl.-Ing

(57) **Abstract**

A telephone subset with selectable DTMF signalling means and decadic dialling means, the subset includes a tone detector (7) to detect dial tone generated by the exchange to which the subset is connected, and processor means (4) to control the transmission of dial signals entered into a memory in the subset, wherein, when the phone is first connected to an exchange line (L1, L2) and a number consisting of a plurality of digits is dialled by a user of the subset and entered into the memory, the processor causes the first digit to be transmitted to the exchange as a DTMF signal, wherein the processor means is responsive to the tone detector to cause the rest of the digits to be transmitted as DTMF signals if the tone detector indicates that the dial tone has ceased, and wherein the processor means causes the plurality of digits to be transmitted as decadic pulses if the tone detector indicates that the dial tone continued after the first digit had been received by the exchange.

## Description

### Background

When a call is made from a telephone, the dialled number is passed to the exchange and the exchange sets up the connection. There are two common modes of signalling to pass the dialled number to the exchange.
1. Decadic dialling is an old method of signaling where the loop current flowing from the exchange and through the telephone is broken a number of times by the telephone. The number of breaks corresponds to the digit dialled. The exchange counts the breaks to determine the dialled digit. In Australian a '1' produces a single break, a '9' produces 9 breaks and a '0' produces 10 breaks. The characters * and # are not supported by decadic dialling. Decadic dialling is gradually being phased out.
2. The second form of signalling is dual tone multi-frequency (DTMF). DTMF or Tone dialling consists of a unique pair of tones transmitted to the exchange whenever a digit is dialled. A total of 12 tone frequencies are required to transmit the digits 0 to 9, *, #. DTMF signaling is superior to decadic and is gradually replacing decadic signalling.

Although modern exchanges will accept either DTMF or decadic dialling, older exchanges support decadic only. To cater for this situation, most phones provide a switch for the user to select the dialling mode. Some phones also allow for the dialling mode to be changed during a call by pressing a 'mode' key on the keypad. Generally the mode can be changed from Decadic to DTMF using the keypad but not the reverse.

A problem with this arrangement is that if the phone is incorrectly set to DTMF dialling and connected to a Decadic only exchange, it will not be possible to establish a call. Also, the switch adds to the cost of the phone.

### Summary of the Invention

The invention relies on the fact that when an exchange accepts a dialled digit, the dial tone is muted by the exchange to indicate that the exchange has accepted the digit. When the telephone handset is lifted the exchange provides an audible dial tone to signal that it is ready to receive dialling information. If the exchange is a Decadic only exchange and a DTMF digit is sent then the exchange will ignore the DTMF digit and continue to provide dial tone.

By detecting the muting of the dial tone after dialling the first DTMF digit, the phone is able to determine if the exchange will accept DTMF dialling. If after dialling the first digit as DTMF the exchange continues to provide dial tone, then the exchange must be a Decadic only exchange. Subsequent digits are then dialled with the appropriate signalling (Decadic or DTMF) for the eachange.

The specification discloses a telephone subset having selectable DTMF signalling means and decadic dialling means, the subset including a tone detector to detect dial tone generated by the exchange to which the subset is connected, and processor means to control the transmission of dial signals entered into a memory in the subset, wherein, when the phone is first connected to an exchange line and a number consisting of a plurality of digits is dialled by a user of the subset and entered into the memory, the processor causes the first digit to be transmitted to the exchange as a DTMF signal, wherein the processor means is responsive to the tone detector to cause the rest of the digits to be transmitted as DTMF signals if the tone detector indicates that the dial tone has ceased, and wherein the processor means causes the plurality of digits to be transmitted as decadic pulses if the tone detector indicates that the dial tone continued after the first digit had been received by the exchange.

### Brief Description of the Drawings

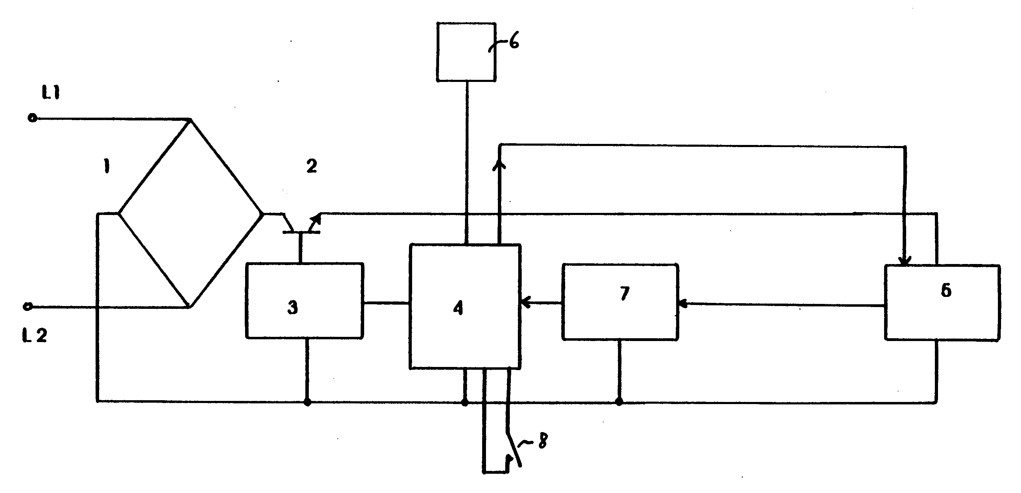

The single figure of the drawing shows a block diagram of a subset circuit embodying the invention.

### Description of the Invention

Referring to the drawing, the subset is connected to an exchange line at terminals L1, L2 via the subset's bridge rectifier 1. The subset has a line switch 2 controlled by control circuit 3. Dial chip 4 in turn controls control circuit 3. The subset also includes transmission circuitry 5 and keypad 6. The keypad is used to enter information such as phone numbers into the dial circuit where it is stored for transmission. This arrangement is similar to the subset circuit described in Australian Patent No. 580,679. A tone detector 7 is added to this circuit and is designed to detect the dial tone from the exchange.

The dial circuit 4 includes processor means controlling storage means to store numbers entered via keypad 6 and storage DTMF signal generating means and decadic signal generating means. The DTMF signals, or alternatively the decadic signals, are applied to the transmission circuit 5 which causes the dialling signals to be transmitted to line via the line switch 2 controlled by control circuit 3.

Alternative arrangements for transmitting the dialling signals include a DTMF generator means in series with the line switch and controlled by the dialling circuit processor.

The sequence of operation is as follows:
. The user seizes the telephone line by lifting the handset or going handsfree; Hookswitch 8 operates which extends a signal to the dial chip 4 thereby causing line switch 2, controlled by control circuit 3 to sieze the line.
. After a short period of time, the exchange provides dial tone.
. Prior to receipt of dial tone, the telephone may accept and store keystrokes but cannot commence dialling until receipt of dial tone.
. After detection of dial tone, the telephone dials the first digit entered by the user in DTMF mode.
. The telephone then checks for the presence of dial tone by polling the output of tone detector 7.
. If dial tone is still present, then the telephone assumes that the exchange is Decadic. The entire number including the first digit is then dialled in Decadic mode. If dial tone was absent after the first digit, then the telephone assumes that the exchange is DTMF and dials the remainder of the number in DTMF mode.

If the phone is used with a PABX and an outside exchange line access digit is dialled then the above algorithm would need to be modified. If the PABX accepts an access code in DTMF but the exchange is Decadic only then the telephone would incorrectly assume that the exchange accepts DTMF dialling. An acceptable modification would be to perform the above test again after dialling the access digit.

The tone detector must be able to detect all possible types of dial tones and yet reject speech as noise on the line.

## Claims

1. A telephone subset having selectable DTMF signalling means and decadic dialling means, the subset including a tone detector to detect dial tone generated by the exchange to which the subset is connected, and processor means to control the transmission of dial signals entered into a memory in the subset, wherein, when the phone is first connected to an exchange line and a number consisting of a plurality of digits is dialled by a user of the subset and entered into the memory, the processor causes the first digit to be transmitted to the exchange as a DTMF signal, wherein the processor means is responsive to the tone detector to cause the rest of the digits to be transmitted as DTMF signals if the tone detector indicates that the dial tone has ceased, and wherein the processor means causes the plurality of digits to be transmitted as decadic pulses if the tone detector indicates that the dial tone continued after the first digit had been received by the exchange.

2. A subset as claimed in claim 1 wherein, when the processor means switches the subset to the decadic mode, the subset remains in the decadic mode unless the phone is disconnected from the line supply, in which case the subset reverts to the initial mode of testing the response of the exchange dial tone when the subset is reconnected and a number is dialled.

3. A subset having selectable dialling modes substantially as herein described with reference to the accompanying drawings.
